# FASCICULE DE BREVET EUROPEEN

(11) **EP 3 746 313 B1**
(45) Date de publication et mention de la délivrance du brevet: **23.03.2022**
(21) Numéro de dépôt: 19707425.5
(22) Date de dépôt: 29.01.2019
(51) Int. Cl.: B60C 9/20, B60C 9/28

(54) **PNEUMATIQUE COMPORTANT TROIS COUCHES DE TRAVAIL**
REIFEN MIT DREI ARBEITSSCHICHTEN
TYRE COMPRISING THREE WORKING LAYERS

(30) Priorité: 30.01.2018 FR 1850717
(43) Date de publication de la demande: 09.12.2020
(73) Titulaire: COMPAGNIE GENERALE DES ETABLISSEMENTS MICHELIN, 63000 Clermont-Ferrand (FR)
(72) Inventeur: DEGEORGES, Agnès, 63040 Clermont-Ferrand Cedex 9 (FR); BHATTACHARYA, Saptarshi, 63040 Clermont-Ferrand Cedex 9 (FR)
(74) Mandataire: Le Cam, Stéphane Georges Elie
(86) Numéro de dépôt international: PCT/FR2019/050201
(87) Numéro de publication internationale: WO 2019/150041

(56) Documents cités:
- WO-A1-2017/005480
- FR-A1- 2 791 001
- FR-A1- 2 887 816

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande de brevet WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique.

Les résultats ainsi obtenus en termes d'endurance et d'usure lors de roulages prolongés sur routes à grande vitesse sont le plus souvent satisfaisants. Toutefois, il apparaît que dans certaines conditions de roulage, certains pneumatiques présentent parfois une usure plus prononcée sur une partie de leur bande de roulement. Ce phénomène s'accentue lorsque la largeur de la bande de roulement augmente.

En outre, quelles que soient les solutions envisagées telles que présentées précédemment, la présence d'une couche d'éléments de renforcement supplémentaire conduit à une masse plus importante du pneumatique et à des coûts de fabrication des pneumatiques plus importants.

Le document WO 10/069676 propose une couche d'éléments de renforcement circonférentiels répartis selon un pas variable. Selon les pas choisis, plus espacés dans les parties centrales et intermédiaires de la couche d'éléments de renforcement circonférentiels, il est possible de réaliser des pneumatiques dont les performances en termes d'endurance sont satisfaisantes avec des performances en termes d'usure améliorées. En outre, par rapport à un pneumatique comportant une couche d'éléments de renforcement circonférentiels répartis selon un pas constant, il est possible de diminuer la masse et le coût de tels pneumatiques bien qu'il soit nécessaire de combler l'absence d'éléments de renforcement par des masses polymériques.

Par ailleurs, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance.

Le document WO 2017/005480 décrit un pneumatique dont l'armature sommet comporte trois couches de sommet de travail en vue de l'amélioration des performances d'endurance pour des roulages sur des sols caillouteux.

Un but de l'invention est de fournir des pneumatiques pour véhicules "Poids-Lourds", de type « approche chantier », dont les performances d'usure sont conservées et dont les performances d'endurance sont améliorées notamment au regard des chocs subis lors de roulages sur des sols caillouteux.

Ce but est atteint selon l'invention par un pneumatique à armature de carcasse radiale pour véhicule de type poids lourd comprenant une armature de sommet comportant trois couches de sommet de travail d'éléments de renforcement, elle-même coiffée radialement d'une bande de roulement, ladite bande de roulement étant réunie à deux bourrelets par l'intermédiaire de deux flancs, les éléments de renforcement des deux couches de travail radialement les plus extérieures étant croisés d'une couche à l'autre en faisant avec la direction circonférentielle des angles compris entre 20 et 45°, lesdits angles étant orientés de part et d'autre de la direction circonférentielle, les angles, formés avec la direction circonférentielle, des éléments de renforcement de la couche de travail radialement la plus intérieure étant compris entre 15 et 20°, les éléments de renforcement des deux couches de travail radialement les plus intérieures étant orientés selon la même direction par rapport à la direction circonférentielle, le ratio de la différence entre les angles, formés avec la direction circonférentielle, des éléments de renforcement des deux couches de travail radialement les plus intérieures sur l'angle, formé avec la direction circonférentielle, des éléments de renforcement de la couche de travail radialement la plus intérieure étant strictement inférieur à 0.65, la valeur moyenne entre l'angle moyen en valeur absolue, formé avec la direction circonférentielle, des éléments de renforcement des deux couches de travail radialement les plus intérieures et de l'angle en valeur absolue, formé avec la direction circonférentielle, des éléments de renforcement de la couche de travail radialement la plus extérieure étant inférieure ou égale à 22°, les largeurs des deux couches de travail radialement les plus extérieures étant supérieures à 0.7 fois la largeur de la bande de roulement et la largeur de la couche de travail radialement la plus intérieure étant strictement inférieure à 0.7 fois la largeur de la bande de roulement.

De préférence selon l'invention, la différence entre les angles des éléments de renforcement des couches de travail radialement les plus extérieures est inférieure à 50°.

De préférence encore selon l'invention la différence entre les angles des éléments de renforcement des couches de travail radialement les plus extérieures est supérieure à 42°.

Les largeurs axiales des couches d'éléments de renforcement sont mesurées sur une coupe transversale d'un pneumatique, le pneumatique étant donc dans un état non gonflé.

La largeur axiale de la bande de roulement est mesurée entre deux extrémités d'épaulement lorsque le pneumatique est monté sur sa jante de service et gonflé à sa pression nominale.

Une extrémité d'épaulement est définie par l'arête formée entre la surface de roulement et le flanc du pneumatique lorsque celle-ci est bien définie. Lorsque cette arête n'est pas clairement marquée sur le pneumatique, l'extrémité d'épaulement est définie, dans la zone de l'épaule du pneumatique, par le point de tangence entre une droite, formant un angle de 30° avec la direction axiale, et la surface extérieure du pneumatique.

Les mesures d'angles sont selon l'invention réalisées au niveau du plan médian circonférentiel.

Les résultats obtenus avec des pneumatiques conformes à l'invention ont effectivement mis en évidence que les performances en termes d'endurance sont améliorées pour ce qui concerne les résultats observés lors de roulage sur sol caillouteux.

Les inventeurs ont su mettre en évidence que l'association des trois nappes de travail selon l'invention permet d'assouplir le sommet et est donc favorable à une amélioration des performances d'endurance notamment lors de roulages de type « approche chantier ». En effet, en comparaison des architectures plus usuelles de ce type de pneumatique, la présence d'une couche de travail radialement la plus intérieure dont les éléments de renforcement sont orientés dans le même sens que les éléments de renforcement de la couche de travail radialement à son contact avec un angle formé avec la direction circonférentielle plus petit permet de diminuer sensiblement les contraintes supportées par les couches de travail radialement les plus extérieures. En outre, la largeur de cette couche de travail, radialement la plus intérieure, plus petite que celles des deux autres couches permet d'éviter tous risques de clivage à ses extrémités.

Par ailleurs, les inventeurs ont su mettre en évidence que lors de roulage dans des conditions particulièrement sévères, par exemples en termes de charge ou de pression, la combinaison du ratio de la différence entre les angles des éléments de renforcement des couches de travail radialement les plus intérieures sur l'angle des éléments de renforcement de la couche de travail radialement la plus intérieure strictement inférieur à 0.65 et de la valeur moyenne entre l'angle moyen des éléments de renforcement des deux couches de travail radialement les plus intérieures et de l'angle des éléments de renforcement de la couche de travail radialement la plus extérieure inférieure ou égale à 22°, permet d'améliorer les performances en termes d'endurance de l'armature carcasse, ladite combinaison permet de limiter les mises en compressions de ladite couche d'armature de carcasse. En effet cette combinaison qui assure d'une part une meilleure tenue du profil du pneumatique du fait d'une rigidité circonférentielle supérieure à celle de pneumatiques plus usuels permet d'autre part d'optimiser les phénomènes de triangulation entre les éléments de renforcement lors des roulages et ainsi de limiter les mises en compression des éléments de renforcement de la couche d'armature de carcasse.

Le ratio de la différence entre les angles des éléments de renforcement des couches de travail radialement les plus intérieures sur l'angle des éléments de renforcement de la couche de travail radialement la plus intérieure strictement inférieur à 0.65 contribue encore aux performances du pneumatique en termes d'endurance, ce ratio contribuant à limiter les risques de clivage entre les extrémités des couches de travail radialement les plus intérieures lors des roulages.

Selon une variante avantageuse de l'invention, les éléments de renforcement d'au moins une couche de travail sont des câbles comprenant une couche interne de M fil(s) interne(s) et une couche externe de N fils externes, la couche externe étant enroulée autour de la couche interne.

De préférence selon cette variante avantageuse de l'invention, M=1 ou 2 et N=5, 6, 7, 8 ou 9, de préférence M=1 et N=5 ou 6, ou M=2 et N=7, 8 ou 9.

Avantageusement encore selon cette variante de l'invention, au moins un des fils interne ou externe, de préférence chaque fil interne et externe, de chaque câble d'au moins une couche de travail est au moins de grade UHT.

Au sens de l'invention, un « fil de grade au moins UHT», est un fil présentant une résistance mécanique à la rupture R exprimée en MPa telle que R ≥ 4180 - 2130xD, D étant le diamètre du fil exprimé en mm.

En d'autres termes, avantageusement selon cette variante l'invention, au moins un des fils interne ou externe, de préférence chaque fil interne et externe, de chaque câble d'au moins une couche de travail présente une résistance mécanique à la rupture R exprimée en MPa telle que R ≥ 4180 - 2130xD, D étant le diamètre du fil exprimé en mm.

De préférence encore selon l'invention, au moins un des fils interne ou externe, de préférence chaque fil interne et externe, de chaque câble d'au moins une couche de travail présente une résistance mécanique à la rupture R exprimée en MPa telle que R ≥ 4400 - 2000xD, D étant le diamètre du fil exprimé en mm

De préférence encore selon l'invention, les éléments de renforcement des trois couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4180 - 2130xD, D étant le diamètre du fil exprimé en mm.

Et préférentiellement encore selon l'invention, les éléments de renforcement des trois couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4400 - 2000xD, D étant le diamètre du fil exprimé en mm.

Selon ces variantes de l'invention, il est possible de réaliser des pneumatiques allégés en comparaison des pneumatiques plus usuels dans lesquels les éléments de renforcement présentent des diamètres plus importants.

Les inventeurs ont su mettre en évidence que cet allégement du pneumatique est liée à une diminution de l'épaisseur de l'armature de sommet du fait de la réduction du diamètre des éléments de renforcement des couches de travail. Cette diminution du diamètre des éléments de renforcement peut en outre s'associer à des épaisseurs de mélange polymérique réduites par rapport à celles des pneumatiques usuels et ainsi une masse globale de l'armature sommet encore réduite par rapport à celle des pneumatiques usuels.

Les inventeurs ont par ailleurs su mettre en évidence qu'il était possible de réduire les distances entre les éléments de renforcement au sein d'une même couche de sommet de travail par rapport à des conceptions plus usuelles sans nuire aux propriétés d'endurance du pneumatique. Il est en effet usuel de maintenir une distance minimum entre les éléments de renforcement d'une même couche de travail pour limiter les phénomènes de propagation de fissures d'un élément à l'autre.

Les inventeurs qui ont montré que la présence de trois couches de travail selon l'invention diminue les risques d'apparition de fissures au niveau notamment des extrémités des couches de travail radialement les plus intérieures du fait de la répartition des contraintes entre les couches de travail soumises à des effets de clivage et du ratio de la différence entre les angles des éléments de renforcement des couches de travail radialement les plus intérieures sur l'angle des éléments de renforcement de la couche de travail radialement la plus intérieure strictement inférieur à 0.65, montrent encore que cette diminution de l'amorce de fissure conduit ainsi à la possibilité de réduire les distances entre les éléments de renforcement.

Cette diminution des distances entre les éléments de renforcement d'une même couche de travail contribue par ailleurs à une diminution des risques de perforation du sommet du pneumatique.

De préférence selon l'invention, la distance entre les éléments de renforcement, mesurée selon la normale à la direction de la ligne moyenne du fil, est inférieure à 0.80 mm.

La distance entre les éléments de renforcements d'une couche de travail est selon l'invention mesurée au niveau du plan médian circonférentiel.

La combinaison des caractéristiques des couches de travail selon l'invention, notamment de la distance entre les éléments de renforcement et leur diamètre permet de conserver des propriétés de rigidité des couches de travail suffisantes mais inférieures à celles des couches de travail d'un pneumatique de conception plus usuelle pour favoriser l'assouplissement du sommet du pneumatique.

Avantageusement encore selon l'invention, la rigidité par unité de largeur de chacune des couches de sommet de travail est comprise entre 50 et 80 daN/mm.

La rigidité par unité de largeur d'une couche d'éléments de renforcement est déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm.

Selon un mode de réalisation avantageux de l'invention, une couche de mélange caoutchouteux est disposée entre au moins les extrémités des deux couches de sommet de travail radialement les plus extérieures.

La couche de mélange caoutchouteux permet d'obtenir un découplage desdites couches de sommet de travail afin de répartir les contraintes de cisaillement sur une plus grande épaisseur. Ces contraintes de cisaillement apparaissent notamment du fait de tensions circonférentielles lors du passage dans l'aire de contact.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

La présence de cette couche de mélange caoutchouteux permet notamment de contribuer à la limitation des contraintes de cisaillement entre les extrémités des couches de sommet de travail, les rigidités circonférentielles desdites couches de sommet de travail étant nulles à leur extrémité.

Une réalisation préférée de l'invention prévoit encore que l'armature de sommet est complétée radialement à l'extérieur par au moins une couche supplémentaire, dite de protection, d'éléments de renforcement, orientés par rapport à la direction circonférentielle avec un angle compris entre 20° et 45° et de même sens que l'angle formé par les éléments de la couche de travail qui lui est radialement adjacente.

Selon un mode de réalisation de l'invention, les éléments de renforcement de la couche de protection sont des câbles élastiques.

D'autres détails et caractéristiques avantageux de l'invention ressortiront ci-après de la description des exemples de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 10.00 R 20 comprend une armature de carcasse radiale 2 ancrée dans deux bourrelets, non représentés sur la figure. L'armature de carcasse 2 est formée d'une seule couche de câbles métalliques. Ils comportent encore une bande de roulement 5.

Sur la figure, l'armature de carcasse 2 est frettée conformément à l'invention par une armature de sommet 4, formée radialement de l'intérieur à l'extérieur :
- d'une première couche de travail 41 formée de câbles métalliques orientés d'un angle égal à 18°,
- d'une deuxième couche de travail 42 formée de câbles métalliques orientés d'un angle égal à 26°,
- d'une troisième couche de travail 43 formée de câbles métalliques orientés d'un angle égal à -22°,
- d'une couche de protection 44 formées de câbles métalliques élastiques E18.23, parallèles aux fils métalliques de la couche de travail 43.

Les câbles métalliques constituant les éléments de renforcement des deux couches de travail radialement les plus extérieures sont des câbles de formule 9.35 de type SHT présentant un diamètre de 1.35 mm. Ils sont répartis dans chacune des couches de travail avec une distance entre les éléments de renforcement, mesurée selon la normale à la direction de la ligne moyenne du fil égale à 1.15 mm.

Les câbles métalliques constituant les éléments de renforcement de la couche de travail radialement la plus intérieure sont des câbles de formule 9.28 de type SHT présentant un diamètre de 1.07 mm. Ils sont répartis avec une distance entre les éléments de renforcement, mesurée selon la normale à la direction de la ligne moyenne du fil égale à 1.18 mm.

La largeur axiale L₄₁ de la première couche de travail 41 est égale à 110 mm.

La largeur axiale L₄₂ de la deuxième couche de travail 42 est égale à 186 mm.

La largeur axiale L₄₃ de la troisième couche de travail 43 est égale à 166 mm.

La largeur axiale L₄₄ de la couche de protection 44 est égale à 136 mm.

La largeur axiale de la bande de roulement L₅ est égale à 220 mm.

Le ratio de la différence entre les angles, formés avec la direction circonférentielle, des éléments de renforcement des deux couches de travail radialement les plus intérieures sur l'angle, formé avec la direction circonférentielle, des éléments de renforcement de la couche de travail radialement la plus intérieure est égal à 0.44 et donc bien strictement inférieur à 0.65.

La valeur moyenne entre l'angle moyen en valeur absolue, formé avec la direction circonférentielle, des éléments de renforcement des deux couches de travail radialement les plus intérieures et de l'angle en valeur absolue, formé avec la direction circonférentielle, des éléments de renforcement de la couche de travail radialement la plus extérieure est égal à 22° et satisfait donc la condition inférieure ou égale à 22°.

La masse cumulée des trois couches de travail 41, 42, 43 et de la couche de protection 44, comprenant la masse des câbles métalliques et des mélanges de calandrage, se monte ainsi à 8.6 Kg.

Le pneumatique selon l'invention est comparé à un pneumatique de référence de même dimension qui diffère du pneumatique selon l'invention par son armature de sommet formée radialement de l'intérieur à l'extérieur :
- d'une couche de triangulation formée de câbles métalliques inextensibles 9.28 non frettés, continus sur toute la largeur de la nappe, orientés d'un angle égal à 65°,
- d'une première couche de travail formée de câbles métalliques inextensibles 9.35 non frettés, continus sur toute la largeur de la nappe, orientés d'un angle égal à 26°,
- d'une seconde couche de travail formée de câbles métalliques inextensibles 9.35 non frettés, continus sur toute la largeur de la nappe, orientés d'un angle égal à 18° et croisés aux câbles métalliques de la première couche de travail,
- d'une couche de protection formées de câbles métalliques élastiques 18.23.

Les câbles métalliques inextensibles 9.35 des couches de travail du pneumatique de référence sont répartis dans chacune des couches de travail avec une distance entre les éléments de renforcement, mesurée selon la normale à la direction de la ligne moyenne du fil égale à 1.15 mm.

Le ratio de la différence entre les angles, formés avec la direction circonférentielle, des éléments de renforcement des deux couches de travail radialement les plus intérieures sur l'angle, formé avec la direction circonférentielle, des éléments de renforcement de la couche de travail radialement la plus intérieure est égal à 0.60.

La valeur moyenne entre l'angle moyen en valeur absolue, formé avec la direction circonférentielle, des éléments de renforcement des deux couches de travail radialement les plus intérieures et de l'angle en valeur absolue, formé avec la direction circonférentielle, des éléments de renforcement de la couche de travail radialement la plus extérieure est égal à 31.75°.

La masse cumulée des couches de travail du pneumatique de référence, de la couche de protection et de la couche de triangulation, comprenant la masse des câbles métalliques et des mélanges de calandrage, se monte à 9 Kg.

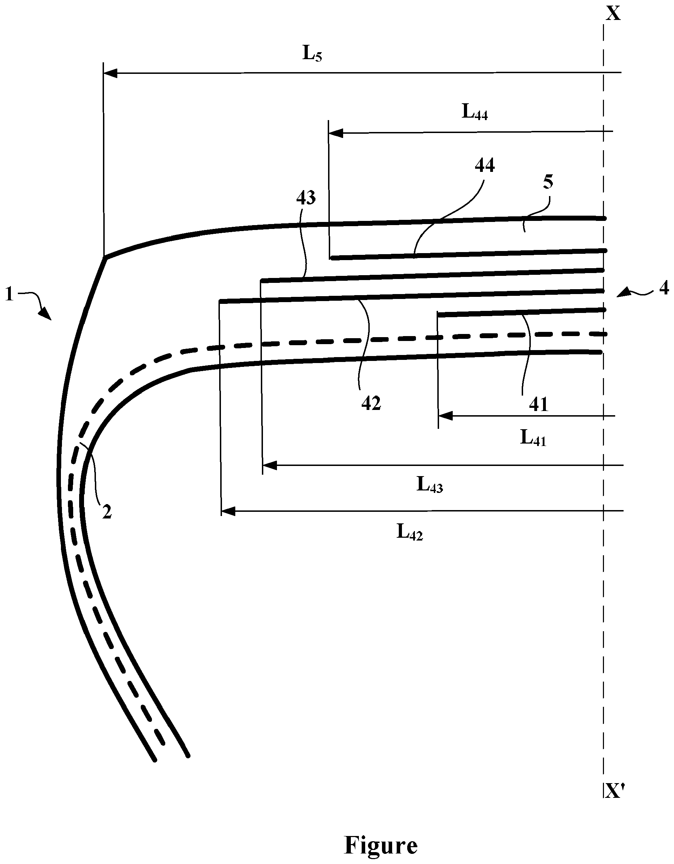

Des essais ont été réalisés avec des pneumatiques réalisés selon l'invention conformément à la figure 1 et avec le pneumatique de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 3075 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence.

Le dernier test a été reconduit en augmentant la surcharge et en allant jusqu'à 1.9 fois la charge nominale. Ce dernier test met en évidence la supériorité des pneumatiques selon l'invention pour des roulages dans de telles conditions de surcharge. En effet, les pneumatiques de référence laissent apparaître des ruptures des éléments de renforcement de l'armature de carcasse alors que les pneumatiques selon l'invention ne présentent aucun dommage.

Deux tests visant à reproduire des usages de type chantier ont également été réalisés. Pour chacun de ces tests, les mesures illustrées sont ramenées à une base 100 pour le pneumatique de référence.

Un premier test consiste en un roulage sur un obstacle simulant la présence d'une pierre. Les valeurs mesurées correspondent à la hauteur de l'obstacle, exprimées en mm, provoquant une rupture du bloc sommet du pneumatique.

| | |
|---|---|
| Référence | 100 |
| Invention | >140 |

L'essai a été arrêté pour le pneumatique selon l'invention sans voir apparaître la moindre perte de pression.

Le deuxième test consiste en l'enfoncement de polars de forme cylindrique sur la bande de roulement du pneumatique. Les valeurs expriment l'énergie nécessaire pour obtenir la rupture du bloc sommet. Les valeurs sont exprimées à partir d'une base 100 correspondant à la valeur mesurée pour le pneumatique de référence.

| | |
|---|---|
| Référence | 100 |
| Invention | 130 |

## Revendications

1. - Pneumatique (1) à armature de carcasse radiale (2) pour véhicule de type poids lourd comprenant une armature de sommet (4) comportant trois couches de sommet de travail d'éléments de renforcement (41, 42, 43), elle-même coiffée radialement d'une bande de roulement (5), ladite bande de roulement (5) étant réunie à deux bourrelets par l'intermédiaire de deux flancs, les éléments de renforcement des deux couches de travail (42, 43) radialement les plus extérieures étant croisés d'une couche à l'autre en faisant avec la direction circonférentielle des angles compris entre 20 et 45°, lesdits angles étant orientés de part et d'autre de la direction circonférentielle, les angles, formés avec la direction circonférentielle, des éléments de renforcement de la couche de travail (41) radialement la plus intérieure étant compris entre 15 et 20°, les éléments de renforcement des deux couches de travail (41, 42) radialement les plus intérieures étant orientés selon la même direction par rapport à la direction circonférentielle, les largeurs (L₄₂, L₄₃) des deux couches de travail (42, 43) radialement les plus extérieures étant supérieures à 0.7 fois la largeur (L₅) de la bande de roulement (5), la largeur (L₄₁) de la couche de travail radialement la plus intérieure étant strictement inférieure à 0.7 fois la largeur (L₅) de la bande de roulement (5), **caractérisé en ce que** le ratio de la différence entre les angles, formés avec la direction circonférentielle, des éléments de renforcement des deux couches de travail (41, 42) radialement les plus intérieures sur l'angle, formé avec la direction circonférentielle, des éléments de renforcement de la couche de travail (41) radialement la plus intérieure est strictement inférieur à 0.65 et **en ce que** la valeur moyenne entre l'angle moyen en valeur absolue, formé avec la direction circonférentielle, des éléments de renforcement des deux couches de travail (41, 42) radialement les plus intérieures et de l'angle en valeur absolue, formé avec la direction circonférentielle, des éléments de renforcement de la couche de travail (43) radialement la plus extérieure est inférieure ou égale à 22°.

2. - Pneumatique (1) selon la revendication 1, **caractérisé en ce que** la différence entre les angles des éléments de renforcement des couches de travail (42, 43) radialement les plus extérieures est inférieure à 50°.

3. - Pneumatique (1) selon la revendication 1 ou 2, **caractérisé en ce que** la différence entre les angles des éléments de renforcement des couches de travail (42, 43) radialement les plus extérieures est supérieure à 42°.

4. - Pneumatique (1) selon l'une des revendications 1 à 3, **caractérisé en ce que** les éléments de renforcement d'au moins une couche de travail (41, 42, 43) sont des câbles comprenant une couche interne de M fil(s) interne(s) et une couche externe de N fils externes, la couche externe étant enroulée autour de la couche interne.

5. - Pneumatique (1) selon la revendication 4, **caractérisé en ce que** M=1 ou 2 et N=5, 6, 7, 8 ou 9, de préférence M=1 et N=5 ou 6, ou M=2 et N=7, 8 ou 9.

6. - Pneumatique (1) selon l'une des revendications 4 ou 5, **caractérisé en ce qu'**au moins un des fils interne ou externe de chaque câble, de préférence chaque fil interne et externe de chaque câble, présente une résistance mécanique à la rupture R, selon la norme ISO 6892 de 1984, exprimée en MPa telle que R ≥ 4180 - 2130xD, D étant le diamètre du fil exprimé en mm.

7. - Pneumatique (1) selon l'une des revendications précédentes, **caractérisé en ce que** les éléments de renforcement des trois couches de travail (41, 42, 43) sont des câbles comprenant une couche interne de M fil(s) interne(s) et une couche externe de N fils externes, la couche externe étant enroulée autour de la couche interne, avec M=1 ou 2 et N=5, 6, 7, 8, et **en ce qu'**au moins un des fils interne ou externe de chaque câble, de préférence chaque fil interne et externe de chaque câble, présente une résistance mécanique à la rupture R, selon la norme ISO 6892 de 1984, exprimée en MPa telle que R ≥ 4180 - 2130xD, D étant le diamètre du fil exprimé en mm.

8. - Pneumatique (1) selon l'une des revendications précédentes, **caractérisé en ce que** la rigidité par unité de largeur de chacune des couches de sommet de travail (41, 42, 43) est comprise entre 50 et 80 daN/mm.

9. - Pneumatique (1) selon l'une des revendications précédentes, **caractérisé en ce qu'**une couche de mélange caoutchouteux est disposée entre au moins les extrémités des deux couches de sommet de travail (42, 43) radialement les plus extérieures.

10. - Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement, orientés par rapport à la direction circonférentielle avec un angle compris entre 20° et 45° et de même sens que l'angle formé par les éléments de renforcement de la couche de sommet de travail (43) qui lui est radialement adjacente.

## Patentansprüche

1. Reifen (1) mit radialer Karkassenbewehrung (2) für ein Schwerlastfahrzeug, welcher eine Scheitelbewehrung (4) umfasst, die drei Arbeitsscheitelschichten (41, 42, 43) aus Verstärkungselementen aufweist und ihrerseits radial von einem Laufstreifen (5) bedeckt ist, wobei der Laufstreifen (5) über zwei Seitenwände mit zwei Wülsten verbunden ist, wobei die Verstärkungselemente der zwei radial äußersten Arbeitsschichten (42, 43) sich von einer Schicht zur anderen überkreuzen und dabei mit der Umfangsrichtung Winkel zwischen 20 und 45° bilden, wobei diese Winkel beiderseits der Umfangsrichtung ausgerichtet sind, wobei die mit der Umfangsrichtung gebildeten Winkel der Verstärkungselemente der radial innersten Arbeitsschicht (41) zwischen 15 und 20° betragen, wobei die Verstärkungselemente der zwei radial innersten Arbeitsschichten (41, 42) in derselben Richtung in Bezug auf die Umfangsrichtung ausgerichtet sind, wobei die Breiten (L₄₂, L₄₃) der zwei radial äußersten Arbeitsschichten (42, 43) größer als das 0,7-Fache der Breite (L₅) des Laufstreifens (5) sind, wobei die Breite (L₄₁) der radial innersten Arbeitsschicht streng kleiner als das 0,7-Fache der Breite (L₅) des Laufstreifens (5) ist, **dadurch gekennzeichnet, dass** das Verhältnis der Differenz zwischen den mit der Umfangsrichtung gebildeten Winkeln der Verstärkungselemente der zwei radial innersten Arbeitsschichten (41, 42) zu dem mit der Umfangsrichtung gebildeten Winkel der Verstärkungselemente der radial innersten Arbeitsschicht (41) streng kleiner als 0,65 ist, und **dadurch, dass** der Mittelwert zwischen dem absoluten Betrag des mittleren mit der Umfangsrichtung gebildeten Winkels der Verstärkungselemente der zwei radial innersten Arbeitsschichten (41, 42) und dem absoluten Betrag des mit der Umfangsrichtung gebildeten Winkels der Verstärkungselemente der radial äußersten Arbeitsschicht (43) kleiner oder gleich 22° ist.

2. Reifen (1) nach Anspruch 1, **dadurch gekennzeichnet, dass** die Differenz zwischen den Winkeln der Verstärkungselemente der radial äußersten Arbeitsschichten (42, 43) kleiner als 50° ist.

3. Reifen (1) nach Anspruch 1 oder 2, **dadurch gekennzeichnet, dass** die Differenz zwischen den Winkeln der Verstärkungselemente der radial äußersten Arbeitsschichten (42, 43) größer als 42° ist.

4. Reifen (1) nach einem der Ansprüche 1 bis 3, **dadurch gekennzeichnet, dass** die Verstärkungselemente wenigstens einer Arbeitsschicht (41, 42, 43) Seile sind, die eine innere Lage aus M inneren Draht (Drähten) und eine äußere Lage aus N äußeren Drähten umfassen, wobei die äußere Lage um die innere Lage gewickelt ist.

5. Reifen (1) nach Anspruch 4, **dadurch gekennzeichnet, dass** M = 1 oder 2 und N = 5, 6, 7, 8 oder 9, vorzugsweise M = 1 und N = 5 oder M = 2 und N = 7, 8 oder 9 ist.

6. Reifen (1) nach Anspruch 4 oder 5, **dadurch gekennzeichnet, dass** wenigstens einer der inneren oder äußeren Drähte jedes Seils, vorzugsweise jeder innere und äußere Draht jedes Seils, eine solche mechanische Bruchfestigkeit R gemäß der Norm ISO 6892 von 1984 aufweist, ausgedrückt in MPa, dass R ≥ 4180 - 2130 x D ist, wobei D der Durchmesser des Drahtes ist, ausgedrückt in mm.

7. Reifen (1) nach einem der vorhergehenden Ansprüche, **dadurch gekennzeichnet, dass** die Verstärkungselemente der drei Arbeitsschichten (41, 42, 43) Seile sind, die eine innere Lage aus M inneren Draht (Drähten) und eine äußere Lage aus N äußeren Drähten umfassen, wobei die äußere Lage um die innere Lage gewickelt ist, mit M = 1 oder 2 und N = 5, 6, 7, 8, **und dadurch, dass** wenigstens einer der inneren oder äußeren Drähte jedes Seils, vorzugsweise jeder innere und äußere Draht jedes Seils, eine solche mechanische Bruchfestigkeit R gemäß der Norm ISO 6892 von 1984 aufweist, ausgedrückt in MPa, dass R ≥ 4180 - 2130 x D ist, wobei D der Durchmesser des Drahtes ist, ausgedrückt in mm.

8. Reifen (1) nach einem der vorhergehenden Ansprüche, **dadurch gekennzeichnet, dass** die Steifigkeit pro Breiteneinheit jeder der Arbeitsscheitelschichten (41, 42, 43) zwischen 50 und 80 daN/mm liegt.

9. Reifen (1) nach einem der vorhergehenden Ansprüche, **dadurch gekennzeichnet, dass** eine Schicht einer Kautschukmischung zwischen wenigstens den Enden der zwei radial äußersten Arbeitsscheitelschichten (42, 43) angeordnet ist.

10. Reifen (1) nach einem der vorhergehenden Ansprüche, **dadurch gekennzeichnet, dass** die Scheitelbewehrung (4) radial außen durch wenigstens eine zusätzliche Lage (44), Schutzlage genannt, aus Verstärkungselementen ergänzt wird, die bezüglich der Umfangsrichtung unter einem Winkel zwischen 20° und 45° und mit derselben Richtung wie der Winkel ausgerichtet sind, der von den Verstärkungselementen der Arbeitsscheitelschicht (43), welche ihr radial benachbart ist, gebildet wird.

## Claims

1. - Tyre (1) with a radial carcass reinforcement (2) for a vehicle of heavy-duty type, comprising a crown reinforcement (4) having three working crown layers of reinforcing elements 41, 42, 43), itself capped radially by a tread (5), said tread (5) being connected to two beads via two sidewalls, the reinforcing elements of the two radially outermost working layers (42, 43) being crossed from one layer to the other, making angles of between 20 and 45° with the circumferential direction, said angles being oriented on either side of the circumferential direction, the angles, formed with the circumferential direction, of the reinforcing elements of the radially innermost working layer (41) being between 15 and 20°, the reinforcing elements of the two radially innermost working layers (41, 42) being oriented in the same direction with respect to the circumferential direction, the widths (L₄₂, L₄₃) of the two radially outermost working layers (42, 43) being greater than 0.7 times the width (L₅) of the tread (5), the width (L₄₁) of the radially innermost working layer being strictly less than 0.7 times the width (L₅) of the tread (5), **characterized in that** the ratio of the difference between the angles, formed with the circumferential direction, of the reinforcing elements of the two radially innermost working layers (41, 42) to the angle, formed with the circumferential direction, of the reinforcing elements of the radially innermost working layer (41) is strictly less than 0.65, and **in that** the mean value between the mean angle in terms of absolute value, formed with the circumferential direction, of the reinforcing elements of the two radially innermost working layers (41, 42) and the angle in terms of absolute value, formed with the circumferential direction, of the reinforcing elements of the radially outermost working layer (43) is less than or equal to 22°.

2. - Tyre (1) according to Claim 1, **characterized in that** the difference between the angles of the reinforcing elements of the radially outermost working layers (42, 43) is less than 50°.

3. - Tyre (1) according to Claim 1 or 2, **characterized in that** the difference between the angles of the reinforcing elements of the radially outermost working layers (42, 43) is greater than 42°.

4. -Tyre (1) according to one of Claims 1 to 3, **characterized in that** the reinforcing elements of at least one working layer (41, 42, 43) are cords comprising an internal layer of M internal thread(s) and an external layer of N external threads, the external layer being wound around the internal layer.

5. - Tyre (1) according to Claim 4, **characterized in that** M=1 or 2 and N=5, 6, 7, 8 or 9, preferably M=1 and N=5 or 6, or M=2 and N=7, 8 or 9.

6. -Tyre (1) according to either of Claims 4 and 5, **characterized in that** at least one of the internal or external threads of each cord, preferably each internal and external thread of each cord, exhibits a mechanical breaking strength R, in accordance with the standard ISO 6892 of 1984, expressed in MPa such that R ≥ 4180 - 2130xD, D being the diameter of the thread expressed in mm.

7. - Tyre (1) according to one of the preceding claims, **characterized in that** the reinforcing elements of the three working layers (41, 42, 43) are cords comprising an internal layer of M internal thread(s) and an external layer of N external threads, the external layer being wound around the internal layer, with M=1 or 2 and N=5, 6, 7 or 8, and **in that** at least one of the internal or external threads of each cord, and preferably each internal and external thread of each cord, exhibits a mechanical breaking strength R, in accordance with the standard ISO 6892 of 1984, expressed in MPa such that R ≥ 4180 - 2130xD, D being the diameter of the thread expressed in mm.

8. - Tyre (1) according to one of the preceding claims, **characterized in that** the stiffness per unit width of each of the working crown layers (41, 42, 43) is between 50 and 80 daN/mm.

9. - Tyre (1) according to one of the preceding claims, **characterized in that** a layer of rubber compound is disposed between at least the ends of the two radially outermost working crown layers (42, 43).

10. - Tyre (1) according to one of the preceding claims, **characterized in that** the crown reinforcement (4) is supplemented radially on the outside by at least one additional ply (44), referred to as a protective ply, of reinforcing elements that are oriented with respect to the circumferential direction at an angle of between 20° and 45° and in the same direction as the angle formed by the reinforcing elements of the working crown layer (43) radially adjacent thereto.
